Europäisches Patentamt

European Patent Office

Office européen des brevets

(11) Publication number: **0 142 847**
**B1**

# (12) EUROPEAN PATENT SPECIFICATION

(45) Date of publication of patent specification: **24.10.90**

(21) Application number: **84113974.4**

(22) Date of filing: **19.11.84**

(51) Int. Cl.⁵: **H 04 L 27/12**

(54) **Digital signal generating device.**

(30) Priority: **24.11.83 JP 221009/83**
**19.11.83 JP 217101/83**

(43) Date of publication of application:
**29.05.85 Bulletin 85/22**

(45) Publication of the grant of the patent:
**24.10.90 Bulletin 90/43**

(84) Designated Contracting States:
**DE FR GB SE**

(56) References cited:
**EP-A-0 008 976**
**FR-A-2 180 901**
**US-A-3 772 681**

**ELECTRONIC DESIGN, vol. 18, no. 21, 11th
October 1970, pages 86-89, Rochelle Park, US;
D.F. ELLIOT et al.: "Simplify function generator
design"**

(73) Proprietor: **FUJITSU LIMITED**
**1015, Kamikodanaka Nakahara-ku**
**Kawasaki-shi Kanagawa 211 (JP)**

(72) Inventor: **Shimozono, Ryoji**
**Fujitsu Kojunso 205 298, Miyauchi Nakahara-ku**
**Kawasaki-shi Kanagawa 211 (JP)**
Inventor: **Ogawa, Yasunori**
**Okurayama Haimu 4-907 902-2, Mamedo-cho
Kohoku-ku**
**Yokohama-shi Kanagawa 222 (JP)**
Inventor: **Tanaka, Yasuo**
**36-22, Tsutsujigaoka Midori-ku**
**Yokohama-shi Kanagawa 227 (JP)**
Inventor: **Sano, Shigeo Fujitsu Shimonoge-ryo
242**
**878, Shimonoge Takatsu-ku**
**Kawasaki-shi Kanagawa 213 (JP)**

(74) Representative: **Lehn, Werner, Dipl.-Ing. et al**
**Hoffmann, Eitle & Partner Patentanwälte**
**Arabellastrasse 4**
**D-8000 München 81 (DE)**

## Description

The present invention relates to a mixed dual frequency generating system.

FR—A—2,180,901 discloses a system for digital conversion in telephonic signalling of multi-frequency signals by the formation of a single coded signal based on two frequencies. In the system disclosed, a sample in digital form is taken alternately from two signals and the two samples are combined into a single digital signal. The document does not disclose how to generate digital FSK signals without phase and amplitude discontinuity and without plural oscillators.

The transmission of analog FSK signals is disclosed in, for example, U.S. Patent No. 4,368,439.

In the field of telephone-line systems, however, wide use is made of PCM channels through which a so-called digital FSK signal is transmitted. The digital FSK signal consists of a sequence of binary coded signals expressing a logic "1" and a logic "0". Each of the binary coded signals in the digital FSK signal consists of a PCM signal obtained by sampling a sine wave data. That is, the logic "1" in the digital FSK signal is formed by a PCM signal having, when converted into an analog signal, a certain frequency, and the logic "0" in the digital FSK signal is formed by a PCM signal having, when converted into an analog signal, another frequency, different from the above certain frequency. For example, according to CCITT, V21, the two frequencies are 980 Hz and 1180 Hz, respectively.

In a conventional digital FSK signal generating device, two PCM signal sources are employed for generating the above-mentioned two PCM. These two PCM signals are always generated from the two PCM signal sources, and a selection unit switches from one of the two PCM signals to the other PCM signal to be output from the device.

There are, however, disadvantages in the above conventional digital FSK signal generating device. That is, it needs two independent PCM signal sources, making it expensive, and at a switching point, these two PCM signals are not always in the same phase. Therefore, the phases of the PCM signals or analog signals obtained from the PCM signal, at the switching point, usually become discontinuous, as later described in more detail. Because of this discontinuity, the digital FSK signal at the switching point has an impulse noise and, therefore, may be erroneously received at a receiver as noise or as another error signal.

Apart from the digital FSK signal generating device, a device for generating two mixed signals having different frequencies is useful for various applications. For example, in testeing a modem, by applying a signal having two mixed frequencies, the characteristics for respective frequency components can be simultaneously examined. Also, a tone signal composed of two mixed frequencies is often used.

In order to generate such a signal having two mixed frequencies, a conventional technique is to provide two oscillators respectively generating frequencies different from each other. In this conventional case also, the need for two oscillators makes the device expensive.

A read only memory (ROM) may be used to obtain two signals having different frequencies by storing mixed data obtained by sampling two sine wave data having different frequencies. By reading the ROM with a sampling period step by step sequentially, the two mixed data can be read. In this case, however, it is impossible to change the frequencies of the output two signals because the stored mixed data are fixed data and are read step by step sequentially. Also, because the ROM must store the two mixed data having different frequencies, the memory size of the ROM must be large.

An object of the present invention is to provide a digital signal generating device which can generate a digital FSK signal with no discontinuity in phase and amplitude.

Another object of the present invention is to provide a digital FSK signal generating device which can change the frequency of the output without a discontinuity in the phase of the PCM signal, thereby decreasing the possibility of erroneous detection at the receiver side.

Still another object of the present invention is to provide a digital signal generating device which can output two mixed signals having different frequencies without the necessity for using two oscillators but, instead, using only a single ROM.

A still further object of the present invention is to provide a digital signal generating device which can output two mixed signals having different frequencies, and in which the frequencies are easily changed.

According to the invention, there is provided a mixed dual frequency generating system comprising: sampled data storing means, having an output, for storing in consecutive addresses a plurality of digital sampled data obtained by sampling, at a predetermined sampling frequency, a fundamental sine wave having a fundamental frequency; extracting step number storing means for storing at least one extracting step number; data extracting means for extracting, at the predetermined sampling frequency, output data from the digital sampled data stored in said sampled data storing means by accessing extracting addresses of said sampled data storing means, the extracting addresses being calculated by adding the extracting step number to a first extracting address to form a second extracting address and then assigning the second extracting address to the first extracting address; and output data fixing means for outputting data "0" at alternate extracting timings.

Preferably, said sampled data storing means stores a number of sampling steps equal to an integer multiple of one-quarter of one cycle of the fundamental sine wave.

In one embodiment, said data extracting means comprises: extracting address latching means for latching the first extracting address until the second extracting address is calculated; and extracting address calculating means for calculating the second extracting address by adding the extracting step number to the first extracting address.

Preferably, said output data fixing means comprises: said extracting address latching means; and control means for supplying a control signal to said extracting address latching means at the alternate extracting timings to output a predetermined extracting address for specifying the data "0".

In a preferred embodiment, said plurality of digital sampled data obtained by sampling a fundamental sine wave having a fundamental frequency includes a number of sampling steps equal to one cycle of the fundamental sine wave; said data extracting means comprises extracting address latching means for latching a first extracting address representing one of the consecutive addresses corresponding to one of the digital sampled data to be extracted from said sampled data storing means, and extracting address calculating means for adding the extracting step number to the first extracting address to generate a second extracting address, the second extracting address being generated at a rate equal to the predetermined sampling frequency; and control means is provided for supplying a first control signal to said extracting address calculating means when the second extracting address is at least as large as the number of sampling steps in one cycle of the fundamental sine wave, said extracting address calculating means responding to the first control signal by subtracting the number of sampling steps from the second extracting address to generate a third extracting address, said control means causing the third extracting address to be stored in said extracting address latching means as the first extracting address when the first control signal is generated and otherwise causing the second extracting address to be stored in said extracting address latching means as the first extracting address.

The above objects and features of the present invention will be more apparent from the following description of the preferred embodiments with reference to the accompanying drawings, wherein:

Figure 1 shows a waveform diagram for explaining a well-known FSK signal;

Figure 2 shows a well-known telephone-communication line system employing PCM channels for which the present invention is applicable;

Figure 3 shows an example of a conventional digital FSK signal generating device;

Figure 4 shows a waveform diagram for explaining the problems in the conventional device;

Figure 5 is a block diagram of a digital FSK signal generating device, according to a first embodiment of the present invention;

Figure 6 shows a plurality of digital sampled data obtained from a fundamental sine wave data for its one cycle;

Figure 7 shows a flowchart explaining the operation of the device shown in Figure 5;

Figure 8 shows an example of the digital FSK signal extracted from the device shown in Figure 5;

Figure 9 shows the digital sampled data obtained from the 1/4 cycle of the fundamental sine wave data;

Figure 10 is a block diagram of a digital FSK signal generating device according to a third embodiment of the present invention;

Figure 11 shows a flowchart explaining the operation of the device shown in Figure 10;

Figure 12 is a block diagram illustrating a digital signal generating device according to a third embodiment of the present invention;

Figure 13A is a waveform diagram illustrating a sine wave data obtained from the device shown in Figure 12;

Figure 13B is a waveform diagram illustrating an analog signal including two frequencies which are also obtained from the device shown in Figure 12;

Figure 14 shows a frequency spectrum of the two signals included in the analog signal shown in Figure 13B;

Figure 15 is a diagram explaining the operation of the device shown in Figure 12; and

Figure 16 is a block diagram of a digital signal generating device according to a fourth embodiment of the present invention.

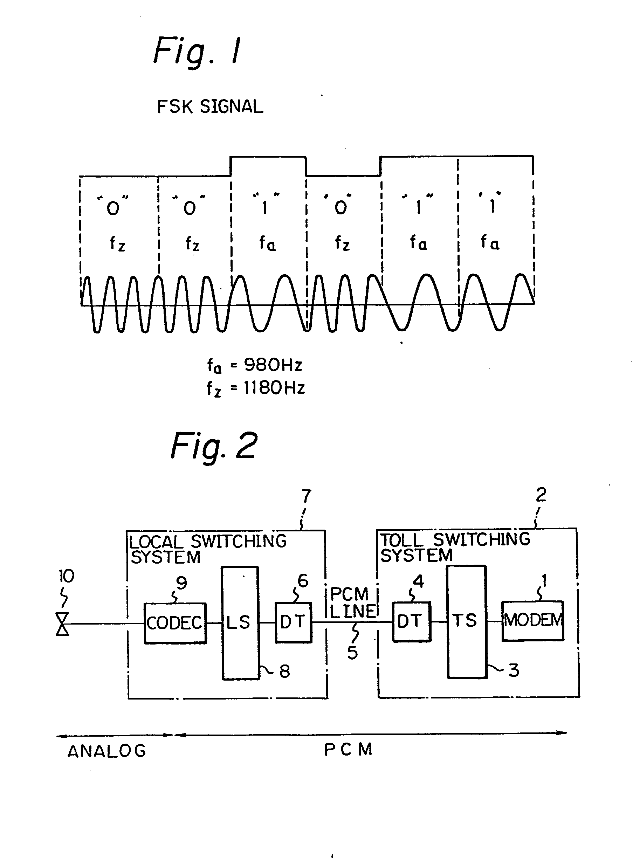

Before describing the embodiments of the present invention, the background of the invention and the prior art and problems therein will first be described with reference to Figures 1 through 4.

Figure 1 shows a waveform diagram for explaining a well known FSK signal. As shown in Figure 1, the FSK signal consists of a sequence of logical states, "1" and "0", of digital data to be sent. Each of the logical states of "1" consists, when the FSK signal is formed by PCM signals, of a sampled data which has, when converted into an analog sine wave data, a first frequency fa equal to 980 Hz in this example. Also, each of the logical states "0" in the digital FSK signal consists of a sampled data having a second frequency fz equal to 1180 Hz in this example. Hereinafter, the term "the frequency of the digital sampled data" will refer to the frequency of the sine wave data corresponding to the digital sampled data. These data samples are PCM signals. And thus, when the FSK signal is formed by the PCM signals, the FSK signal is referred as "digital" to distinguish it from the usual FSK signal whose logical values consist of analog sine wave data. The digital or analog FSK signal has advantages over a simple binary coded signal having high and low constant voltages of "1" and "0", in that the frequencies of the sine wave data can be easily detected instead of the voltages, which may drop over a long distance.

Figure 2 shows a well-known telephone-communication line system employing PCM channels for which the present invention can be applied, and through which PCM channels the above-mentioned digital FSK signal is transmitted. In this system, a modulator—demodulator (modem) 1 in a toll switching system 2 should preferably generate a PCM signal such as the above-mentioned digital FSK signal, rather than the analog FSK signal. In Figure 2, the modem (MOD) 1 provides a digital FSK signal to a toll switch (TS) 3. The toll switch (TS) 3 selects a digital terminal (DT) 4 to transmit the digital FSK signal through a PCM line 5 to a digital terminal (DT) 6 at a local switching system 7. In the local switching system 7, the digital FSK signal from the digital terminal (DT) 6 is time division switched by a local switch (LS) 8. The output of the local switch (LS) 8 is converted into an analog signal by a coder-decoder (CODEC) 9. The analog signal is then applied to a subscriber 10. The system shown in Figure 2 is applied to, for example, a detailed charging system for general telephone services in a hotel. In this case, the digital FSK signal on the PCM line 5 is transmitted at a low speed of 300 baud.

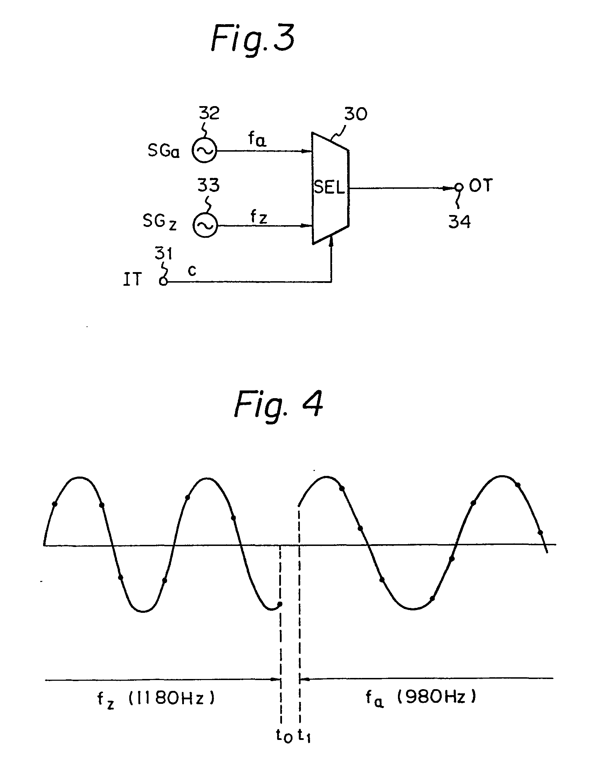

Figure 3 shows an example of a conventional digital FSK signal generating device used in prior art. In Figure 3, a selecting unit (SEL) 30 selects, in response to a logical state of a command C consisting of a binary code applied to an input terminal (IT) 31, one of two PCM signals generated by two signal sources (SGa) 32 and (Gz) 33, respectively. The signal source (SGa) 32 always generates a PCM signal having a frequency fa, and the signal source SGz 33 always generates a PCM signal having a frequency fz. The selected PCM signal is output from an output terminal (OT) 34. Thus, by changing the command C, a digital FSK signal such as shown in Figure 1 can be obtained. However, since the conventional device includes the two signal sources (SGa) 32 and (SGz) 33, it has a disadvantage in that it is too expensive, and further, since the phases of the two signals generated by the two signal sources 32 and 33 do not always coincide, the digital FSK signal includes, at its switching points from "0" to "1" or from "1" to "0", impulse noises. This will be explained in more detail with reference to Figure 4.

Figure 4 shows a waveform diagram illustrating a sequence of two sine waves which are obtained by converting the digital FSK signal output from the selecting unit (SEL) 30 shown in Figure 3. The first sine wave $S_1$ has the high frequency fz, and the second sine wave $S_2$ has the low frequency fa. Between a time $t_0$ and a time $t_1$, the first sine wave $S_1$ is switched to the second sine wave $S_2$. This switching is accomplished by changing the binary code of the command C applied to the input terminal (IT) 31 shown in Figure 3. Since the phase and amplitude of the first sine wave $S_1$ does not coincide, at the time $t_0$ and of course at the time $t_1$, with the phase and amplitude of the second sine wave $S_2$, the wave forms $S_1$ and $S_2$ are discontinuous between the time $t_0$ and the time $t_1$. This discontinuity causes the impulse noises at the receiver side, such as the subscriber 10 shown in Figure 2.

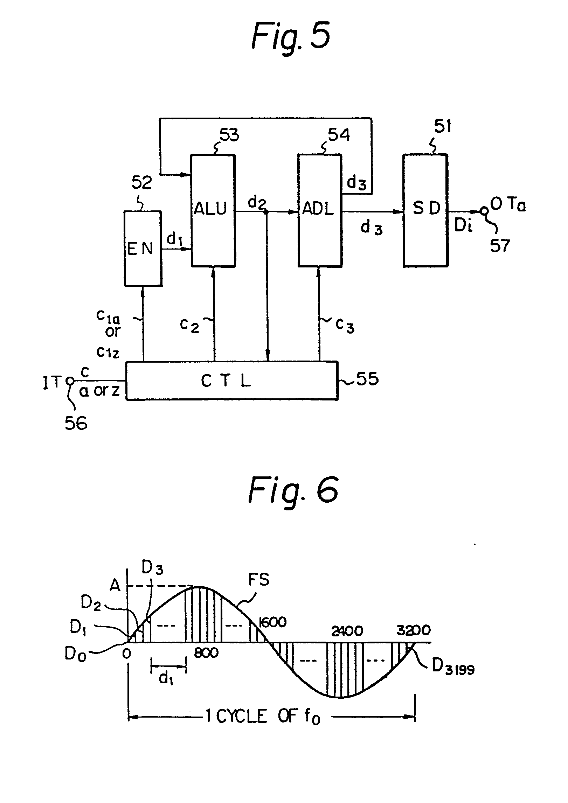

Figure 5 is a block diagram of a digital FSK signal generating device, according to a first embodiment of the present invention. In Figure 5, a sampled data storing unit (SD) 51 is a read only memory (ROM) for sequentially storing, in its continuous addresses, a plurality of digital sampled data. These digital sampled data are obtained by sampling a fundamental sine wave data for a predetermined cycle. The fundamental sine wave data has a fundamental frequency $f_0$ which is a common factor of the two frequencies fa and fz in the desired digital FSK signal. For example, when the frequencies fa and fz of the digital FSK signal are 980 Hz and 1180 Hz, respectively, a common factor of, for example, 2.5 Hz, is selected as the fundamental frequency $f_0$ of the fundamental sine wave data. The fundamental frequency $f_0$ may, of course, be the other common factor such as 10 Hz, 20 Hz, etc. The sampling frequency f of the PCM signal in a telephone switching system is usually equal to 8 kHz which is twice the maximum voice frequency. In a simplest model for explanation, the predetermined cycle is equal to one cycle $C_0$ of the fundamental sine wave data. The SD 51 in Figure 5 stores the one cycle $C_0$ of the fundamental sine wave data.

Figure 6 shows the plurality of digital sampled data obtained from the fundamental sine wave data for the one cycle $C_0$. In Figure 6, the fundamental sine wave data FS has the fundamental frequency $f_0$ of 2.5 Hz. The sampling frequency f is 8 kHz. Therefore, the number of sampling steps in the one cycle $C_0$ of the sine wave data FS is equal to $f/f_0$, i.e., 3200 steps. Also, the sampling period is 1/8000 second, i.e., 125 μs. Sampled values $D_0$, $D_1$, $D_2$, $D_3$,..., and $D_{3199}$ obtained by the sampling are stored sequentially as the digital sampled data in the sampled data storing unit (SD) 51 shown in Figure 5.

Referring back to Figure 5, the digital FSK signal generating device further includes an extracting step number storing unit (EN) 52, an extracting address calculating unit (ALV) 53, an extracting address latching unit (ADL) 54, and a control unit (CTL) 55.

The EN 52 stores two extracting step numbers $d_{1a}$ and $d_{1z}$ which are, in this embodiment, 392 and 472, respectively. The extracting step number $d_{1a}$ or $d_{1z}$ is represented by a notation "$d_1$" shown in Figure 6. The extracting step numbers $d_{1a}$ and $d_{1z}$ are determined by dividing the frequencies fa and fz in the desired digital FSK signal with the fundamental frequency $f_0$. That is, in this embodiment,

$$d_{1a}=fa/f_0=980/2.5=392$$

and

$$d_{1z}=fz/f_0=1180/2.5=472.$$

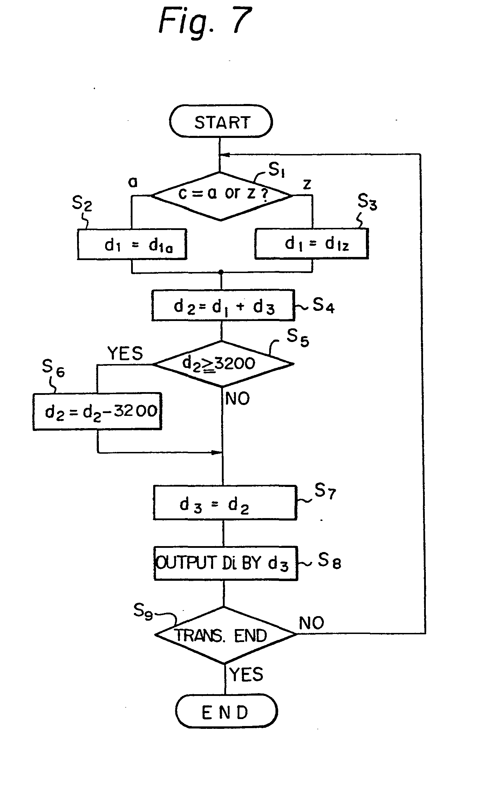

Figure 7 shows a flowchart explaining the operation of the device shown in Figure 5. Referring to Figures 5 and 7, at step $S_1$, the CTL 55 discriminates whether the command C applied to the input terminal (IT) 56 is a command "a" or "z" for specifying the first frequency fa or the second frequency fz to be output. The commands "a" and "z" are, for example, "1" and "0", respectively which are equal to the binary data to be sent from the device shown in Figure 5 to receiver side.

If the binary code C is the command "a", the CTL 55 provides a control signal $C_{1a}$ to the EN 52 which, at step $S_2$, outputs the first extracting step number $d_{1a}$ as the extracting step number $d_1$, in response to the control signal $C_{1a}$. If the command C is the command "z", the CTL 55 provides a control signal $C_{1z}$ and the EN 52 outputs, at step $S_3$, the second extracting step number $d_{1z}$ as the extracting step number $d_1$.

At step $S_4$, the ALU 53 calculates a next extracting address $d_2$ by adding the extracting step number $d_1$ with a previous extracting address $d_3$ which has been latched in the ADL 54.

At step $S_5$, the CTL 55 discriminates whether the calculated extracting address $d_2$ output from the ALU 53 is greater than or equal to the number of sampling steps in the one cycle, i.e., the number of sampling steps in this embodiment is 3200.

If $d_2 \geqq 3200$, then, at step $S_6$, the CTL 55 provides another control signal $C_2$ to the ALU 53, and the ALU 53 converts the extracting address $d_2$ into another new extracting address by subtracting the number of sampling steps (3200) from the new extracting address $d_2$. That is, $d_2$ is updated to $d_2 - 3200$.

After step $S_6$, or if $d_2 < 3200$ at step $S_5$, then the CTL 55 provides still another control signal $C_3$ to the ADL 54 so that, at step $S_7$, the ADL 54 latches the updated or original new extracting address $d_2$. Thus, the previous extracting address $d_3$ is updated to the updated or original new extracting address $d_2$, to form a current extracting address $d_3$ which is equal to $d_2$.

Then, at step $S_8$, the SD 51 is accessed by the current extracting address $d_3$ so that a sampled data $D_i$ stored in the address $d_3$ of the SD 51 is read and output.

At step $S_9$, the CTL 55 discriminates whether the transmission from the SD 51 should be ended. Until the transmission ends, the above mentioned steps $S_1$ through $S_8$ are repeated with the sampling frequency of 8 kHz. As a result, a digital FSK signal is obtained at the output terminal (OTa) 57.

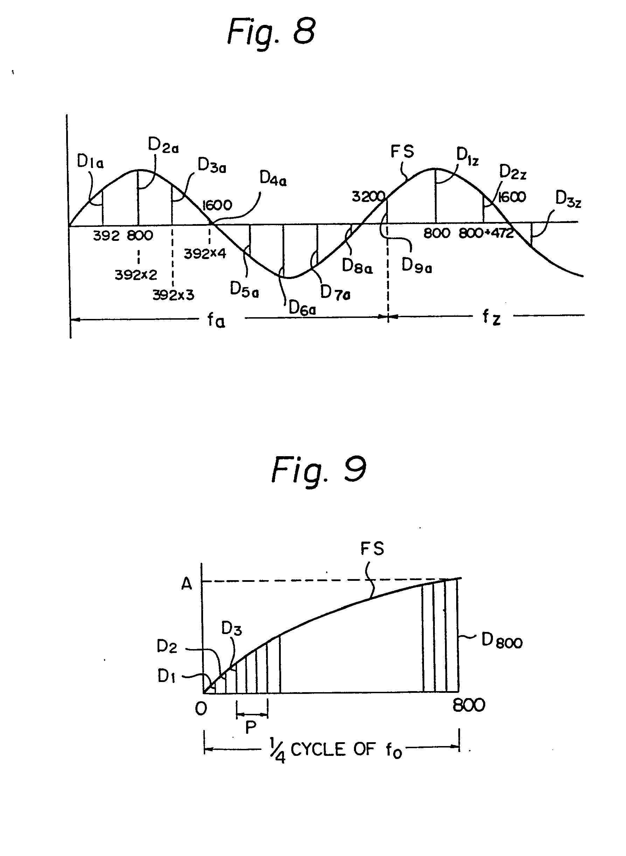

Figure 8 shows an example of the digital FSK signal extracted from the SD 51 shown in Figure 5. As shown in Figure 8, data $D_{1a}$, $D_{2a}$, $D_{3a}$,..., and $D_{4a}$ are those extracted from the SD 51 when the extracting step number is $d_{1a}$ equal to 392. In this case, the extracting addresses $d_1 + d_3$ are sequentially calculated as 0, $392+0=392$, $392+392=784$,..., and 3528. The extracting address 3528 for extracting the data $D_{9a}$ is greater than 3200. Therefore, the address 3528 is converted into $3528-3200$, i.e., 328. On the other hand, data $D_{1z}$, $D_{2z}$, $D_{3z}$,... are those extracted from the SD 51 when the extracting step number is $d_{1z}$ equal to 472. In this case, each of the extracting addresses for extracting the data $D_{1z}$, $D_{2z}$,... is calculated by adding the extracting step number 472 to the previous extracting address. For example, the extracting address for extracting the data $D_{1z}$ is equal to $328+472=800$. By the same way, the data

$$d_{2z} = 800 + 472 = 1272,$$

and so forth. These data $D_{1a}$, $D_{2a}$,..., $D_{4a}$, $D_{1z}$, $D_{2z}$,... are extracted from the SD 51 with a frequency equal to the sampling frequency f of the fundamental sine wave data FS. That is, the extracting period for extracting these data is equal to the sampling period, i.e., $1/f = 125$ μs. Since the data $D_{1a}$, $D_{2a}$,..., and $D_{9a}$ are extracted from each $d_{1a} = 392$ step in the fundamental sine wave data stored in the SD 51, and since the fundamental sine wave data has the fundamental frequency $f_0 = 2.5$ Hz, the extracted PCM signal constituting the extracted data $D_{1a}$, $D_{2a}$,..., and $D_{9a}$ has a frequency equal to

$$d_{1a} \times f_0 = 392 \times 2.5 = 980 \text{ Hz.}$$

Thus, the PCM signal has the first frequency fa equal to 980 Hz, corresponding to, for example "1" of the binary data "1" and "0" in the digital FSK signal to be sent to the receiver side. Similarly, the extracted PCM signal constituting the extracted data $D_{1z}$, $D_{2z}$, $D_{3z}$,... has the second frequency fz equal to $472 \times 2.5 = 1180$ Hz, corresponding to, for example, "0" of the binary data to be sent. It should be noted that the term "digital" in the digital FSK signal does not relate to the binary data but relates to the PCM signal.

Instead of storing the one cycle $C_0$ ($2\pi$ in phase) of the fundamental sine wave data FS in the SD 51, it is possible to store only a 1/2 cycle or even a 1/4 cycle ($\pi/2$ in phase) of the fundamental sine wave data RS.

Figure 9 shows the digital sampled data obtained from the 1/4 cycle of the fundamental sine wave data FS. As shown in Figure 9, 801 data samples $D_0$, $D_1$, $D_2$, $D_3$,..., and $D_{800}$ are obtained from the 1/4 cycle of the fundamental sine wave data FS. The sampling period for obtaining the data samples $D_0$, $D_1$,..., and $D_{800}$ is the same as that shown in Figure 6, i.e., 125 μs.

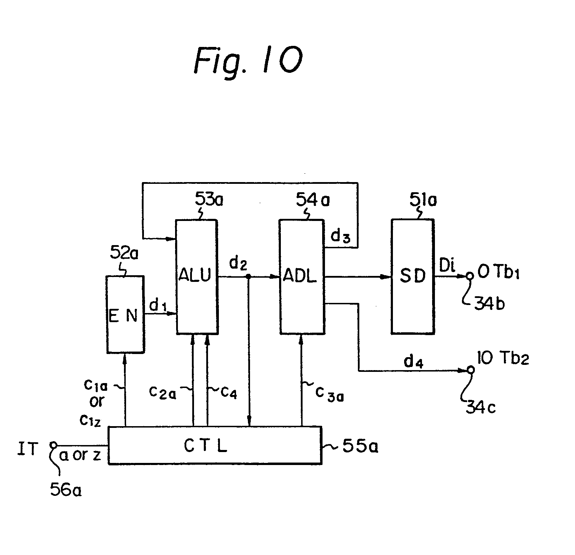

Figure 10 is a block diagram of a digital FSK signal generating device according to a second embodiment of the present invention. In Figure 10, the device comprises a sampled data storing unit (SD) 51a, an extracting number storing unit (EN) 52a, an extracting address calculating unit (ALU) 53a, an extracting address latching unit (ADL) 54a, and a control unit (CTL) 55a, which are similar to those shown in Figure 5 of the first embodiment.

The SD 51a stores the sampled data $D_0$, $D_1$, $D_2$,..., and $D_{800}$ obtained from the 1/4 cycle of the fundamental sine wave data FS shown in Figure 9. Because of this, the operation of the device shown in Figure 10 is slightly different from that of the first embodiment.

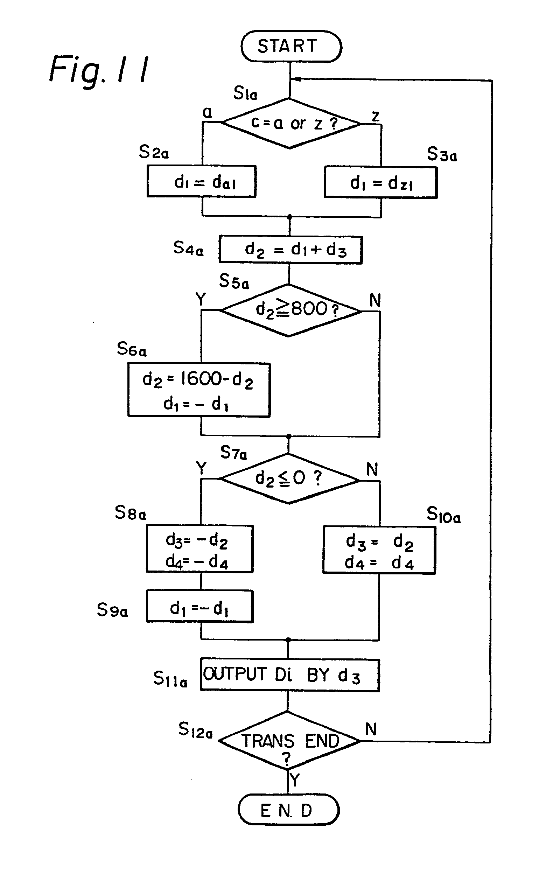

Figure 11 shows a flowchart explaining the operation of the device shown in Figure 10.

Referring to Figures 10 and 11, steps $S_{1a}$ through $S_{4a}$ are the same as the steps $S_1$ through $S_4$ shown in Figure 7. At step $S_{5a}$, the CTL 55a discriminates whether the calculated extracting address $d_2$ is greater than or equal to the number of sampling steps in the 1/4 cycle $C_0/4$ i.e., whether $d_2$ is at a phase more than $\pi/2$.

If $d_2 \geqq 800$, i.e., if $d_2$ is at a phase more than $\pi/2$, then, at step $S_{6a}$, the CTL 55a provides a control signal $C_{2a}$ to the ALU 53a, which then converts the extracting address $d_2$ into another new extracting address by calculating $1600 - d_2$. Also, in response to the control signal $C_{2a}$, the ALU 53a inverts the sign of the extracting step number $d_1$ output from the EN 52a.

After step $S_{6a}$ or if $d_2 < 800$ at step $S_{5a}$, the CTL 55 discriminates, at step $S_{7a}$, whether the calculated extracting address $d_2$ is equal to or smaller than zero.

If $d_2 \leqq 0$ at step $S_{7a}$, then, at step $S_{8a}$, the CTL 55a provides still another control signal $C_{3a}$ to the ADL 54a. In response to the control signal $C_{3a}$, the ADL 54a inverts the sign of the thus calculated extracting address $d_2$ and latches it as an extracting address $d_3$. Also, in response to the control signal $C_{3a}$, the ADL 54a changes a sign code $d_4$ of the extracted sampled data $D_i$. Accordingly, at step $S_{8a}$, the operations $d_3 = -d_2$, and $d_4 = -d_4$ are carried out in the ADL 54a. After step $S_{8a}$, the CTL 55a provides a still further control signal $C_4$ to the ALU 53a, which then inverts the sign of the extracting step number $d_1$.

If $d_2 > 0$ at step $S_{7a}$, then, at step $S_{10a}$, the ADL 54a latches the thus calculated extracting address $d_2$ as the extracting address $d_3$, and outputs the noninverted sign code $d_4$.

At step $S_{11a}$, the SD 51a is accessed by the extracting address $d_3$ so that a sampled data $D_i$ stored in the address $d_3$ is output from the SD 51a to an output terminal $OT_{b1}$. Also, the sign code $d_4$ is output from the ADL 54a to another output terminal $OT_{b2}$. In practice, the data $\underline{D_i \times d_4}$ is output from the device shown in Figure 10.

The above-mentioned steps $S_{1a}$ through $S_{11a}$ are repeated with the sampling frequency of 8 kHz until transmission end is detected by the CTL 55a at step 12a.

According to the above-described first and second embodiments, because the frequency of the digital FSK signal is changed by changing the extracting step number, the phases of the PCM signals or analog signals obtained from the PCM signals are not discontinuous. Therefore, at a receiver side, the digital FSK signal is received with decreased noise or with decreased or no error.

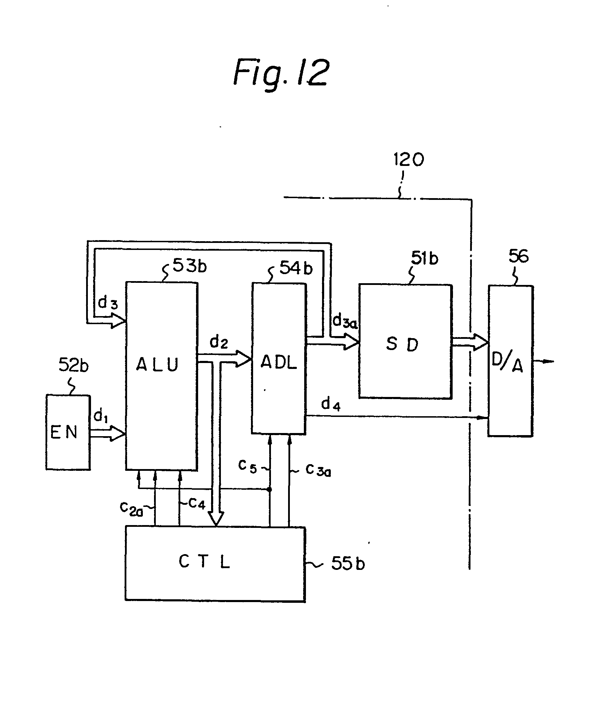

Figure 12 is a block diagram illustrating a digital signal generating device according to a third embodiment of the present invention. The device shown in Figure 12 is for generating a digital signal which has, when converted into an analog signal, two mixed frequencies. In Figure 12, the digital signal generating device 120 comprises an SD 51b, an EN 52b, an ALU 53b, an ADL 54b, and a CTL 55b which are similar to those shown in Figure 10. The output of the SD 51b is connected to a D/A converter 56. The main differences from the second embodiment are that, in Figure 12, the EN 52b stores only a single extracting step number $d_1$, and that the CTL 55b controls the ADL 54b so that the ADL 54b outputs a fixed address alternately in the output addresses. In the fixed address of the DK 51b, the data "0" is stored. Thus, from the output of the SD 51b, the data "0" is output at alternate outputs. When the D/A converter 56 converts the digital data including "0" in alternate data, the analog signal obtained at the output of the D/A converter 56 includes two frequencies.

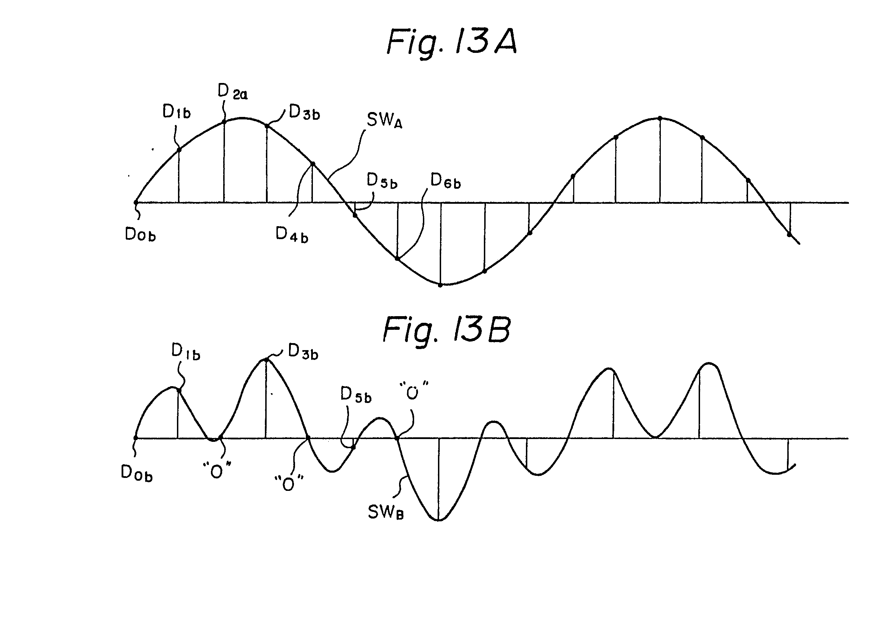

Assume that the SD 51b stores sampled data $D_{1b}, D_{2b}, D_{3b},...$ obtained from the 1/4 cycle of a sine wave data having a frequency $f_0$, as shown in Figure 9. When the sampled data $D_{1b}, D_{2b}, D_{3b},...$ are sequentially read, with the extracting step number $d_1$, from the SD 51b in the way similar to that mentioned with reference to Figure 11 of the second embodiment, and when the read sampled data are converted into analog signal by the D/A converter 56, a sine wave data $SW_A$ having a frequency equal to $f_0 \times d_1$ can be obtained as shown in Figure 13A.

Conversely, when alternate outputs from the SD 51b are made "0", that is, when the data "0" is output from the SD 51b instead of outputting the sampled data $D_{2b}, D_{4b}, D_{6b},...$, the D/A converter converts the digital data $D_{1b}, "0", D_{3b}, "0", D_{5b}, "0"...$ into an analog signal $SW_B$, as shown in Figure 13B. The analog signal $SW_B$ contains two frequencies $f_1$ and $f_2$. When the sampling frequency $f$ is 8 kHz, then the two frequencies $f_1$ and $f_2$ are $f_0 \times d_1$ and $4\,kHz - f_0 \times d_1$. For example, assume that the fundamental frequency $f_0$ of the fundamental sine wave data is 2.5 Hz, and that the extracting step number $d_1$ is 500, then the two frequencies are 1250 Hz and 2750 Hz.

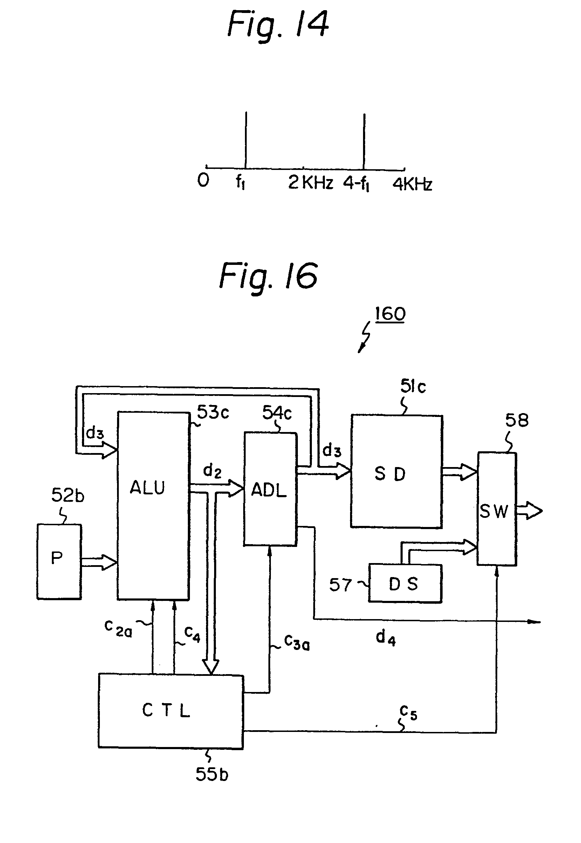

Figure 14 shows a frequency spectrum of the two signals included in the analog signal $SW_B$. As shown in Figure 14, the two frequencies $f_1$ and $f_2 = 4\,kHz - f_1$ are placed symmetrically with respect to 2 kHz, and the two frequencies are present within 4 kHz.

This can be theoretically proven as follows. Assume again that the sampling frequency $f$ is 8 kHz, and that the fundamental frequency of the fundamental sine wave is $f_0$: Then the digital sampled data $D_{nb}$ is

$$\sin\left(2\pi \times \frac{f_0 \times d_1}{8000} \times n\right).$$

Consider another fundamental sine wave having a fundamental frequency equal to $4000 - f_1$. Then the digital sampled data $D_{nc}$ is

$$\sin\left(2\pi \times \frac{(4000 - f_0) \times d_1}{8000} \times n\right).$$

For the sake of simplicity, assume $2\pi f_0 d_1/8000 = \theta$. Then,

$$D_{nb}+D_{nc}=\sin\theta n+\sin(\pi-\theta)n$$
$$=\sin\theta n+\sin\pi n\cdot\cos\theta n-\sin\theta n\cdot\cos\pi n$$
$$=(1-\cos\pi n)\sin\theta n$$

If n is an odd number,

$$Dnb+Dnc=2\sin\theta n$$

If n is an even number,

$$Dnb+Dnc=0$$

Accordingly, by making alternate extracted data from the SD 51b to be "0", the analog signal at the output of the D/A converter 56 becomes the superimposition of two sine waves having the frequencies $f_0d_1$ and 4 kHz$-f_0d_1$, respectively.

Referring back to Figure 12, the operation of the device 120 is almost the same as the operation of the device shown in Figure 10. Therefore, the control signals $C_{2a}$, $C_{3a}$, and $C_4$, and the extracting addresses $d_2$ and $d_3$, are the same as those in Figure 10. The differences between the devices in Figures 10 and 12 are that, in Figure 12, the EN 52b is not controlled by the CTL 55b but provides the predetermined single extracting step number $d_1$, and that the CTL 55b provides a still further control signal $C_5$ to the ALU 53b and to the ADL 54b whenever the calculated extracting addresses $d_2$ are output twice.

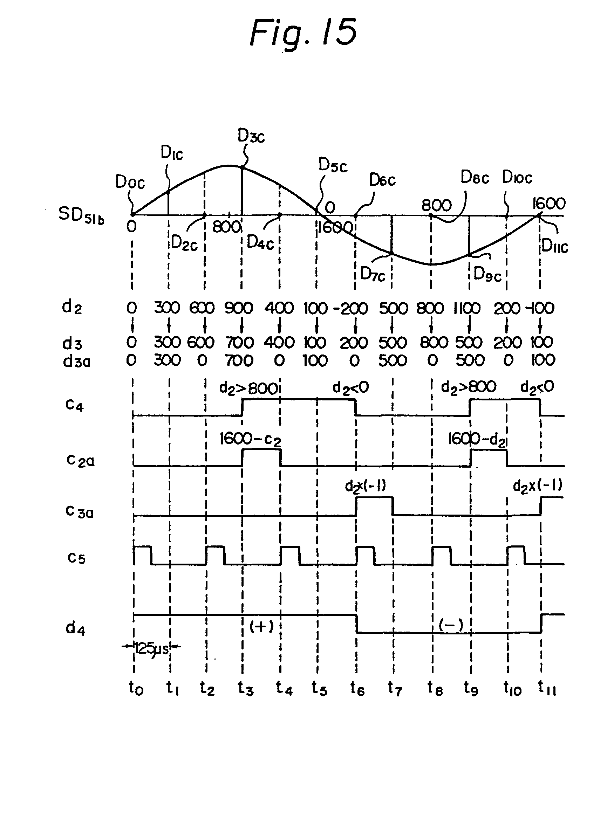

Figure 15 is a diagram explaining the operation of the device shown in Figure 12. In Figure 15, the SD 51b outputs digital data $D_{0c}$, $D_{1c}$, $D_{2c}$,... at times $t_0$, $t_1$, $t_2$,..., respectively. Alternate data $D_{1c}$, $D_{3c}$, $D_{5c}$,... are "0". The extracting period is equal to the sampling period, i.e., 125 μs. The extracting number $d_1$ is assumed to be 300. The control signal $C_5$ becomes "1" at alternate times $t_0$, $t_2$, $t_4$, $t_6$,.... Because of this, the extracting address $d_3$ output from the ADL 54b is made to be zero at alternate times $t_0$, $t_2$, $t_4$, $t_6$,.... The control signal $C_4$ is turned from "0" to "1" when the calculated address $d_2$ output from ALU 53b becomes greater than the number of sampling steps in the range between 0 and π/2 in phase, i.e., when $d_2$ becomes greater than 800. The control signal $C_4$ is turned from "1" to "0" when $d_2$ becomes negative, and the control signal $C_{3a}$ is turned from "0" to "1" when the control signal $C_4$ changes its logic level, and the "1" level of the control signal $C_{3a}$ continues for the sampling period of 125 μs. The level of the sign code $d_4$ changes when the control signal $C_4$ changes from "1" to "0".

At the time $t_0$, $d_2$ and $d_3$ are both preset values equal to zero in this example. Since $C_5$ is "1", $d_{3a}$ for accessing the SD 51b is zero.

At the time $t_1$, $d_2$ is calculated as $d_1+d_3$, i.e., $d_2=300$. Also, $d_3=d_2=300$. Since $C_5$ is "0", $d_{3a}=d_3=300$.

At the time $t_2$, $d_2$ is $d_1+d_3=600$, and $d_3=d_2=600$. Since $C_5$="1", $d_{3a}$=zero.

At the time $t_3$,

$$d_2=d_1+d_3=300+600=900.$$

Since $d_2>800$, the control signal $C_{2a}$ rises. Thus,

$$d_3=1600-d_2=700.$$

$d_{3a}=d_3$ because $C_5$ is "0". Also, since $d_2>800$, the control signal $C_4$ rises. While $C_4$ is "1", the extracting step number $d_1=-300$.

At the time $t_4$, $C_{2a}$ turns to "0", and $C_5$ turns to "1"; $d_2$ is

$$d_1+d_3=-300+700=400;$$

$d_3$ is updated to 400; and since $C_5$ is "1", $d_{3a}$ is zero.

At the time $t_5$, $d_2$ is calculated as

$$d_1+d_3=-300+400=100.$$

Since $C_5$ is "0", $d_3$ and $d_{3a}$ are equal to $d_2$, i.e., 100.

At the time $t_6$, $d_2$ is calculated as

$$d_1+d_3=-300+100=-200.$$

Since $d_2$ is negative, $C_{3a}$ rises and $C_4$ falls. In response to the rise of $C_{3a}$, $d_4$ falls and the negative sign is applied to the D/A converter 56 (Figure 12). Because $C_4$ is "0", $d_1$ is changed from $-300$ to $+300$, and $d_3$ is updated to $-200$. Then because $C_{3a}$ is "1", $d_3$ is further changed to $+200$, and because $C_5$ is "1", $C_{3a}$ is zero.

At the time $t_7$, $d_2$ is calculated as

$$d_1+d_3=300+200=500.$$

Thus $d_3$ is updated to 500, as since $C_5$ is "0", $d_{3a}$ is $d_3=500$.

At the times $t_8$, $t_9$, $t_{10}$, $t_{11}$,..., the extracting addresses $d_2$, $d_3$, and $d_{3a}$ can be calculated in a way similar to the above.

Where the extracting step number $d_1$ is 300, two frequencies, i.e., $300\times2.5=750$ Hz and $4000-750=3250$ Hz, are mixed in the output analog signal from the D/A converter 56.

The extracting step number $d_1$ can be arbitrarily set in the EN 52b. Also, the sampling frequency f can be arbitrarily selected. Therefore, the two frequencies $f_0\times d_1$ and $f/2-f_0\times d_1$ can be arbitrarily changed.

Figure 16 is a block diagram of a digital signal generating device according to a fourth embodiment of the present invention. The digital signal generating device 160 shown in Figure 16 is very similar to the device 120 shown in Figure 12. The same portions, signals, and extracting addresses are represented by the same reference symbols in both Figures 12 and 16. The differences between Figures 12 and 16 are that, instead of accessing the address zero in alternate accessing timings, the device shown in Figure 16 has a data storing unit (DS) 57 for storing the fixed data "0", and a switching circuit 58 for selecting the output of the SD 51c, or the output of the DS 57, in response to the control signal $C_5$ which turns to "1" at alternate extracting timings, as shown in Figure 15. It is apparent that the device shown in Figure 16 can also provide a digital signal including the arbitrarily determined two frequencies $f_0 \times d_1$ and $f/2 - f_0 \times d_1$.

The present invention is not restricted to the above described embodiments. Various changes and modifications are possible. For example, in place of changing the alternate extracting addresses $d_3$ to be "0", as described with reference to Figure 12, an address generating unit for generating the fixed address for accessing the "0" data may be provided between the ADL 54b and the SD 51b so that, instead of the fixed address from the ADL 54b, the fixed address from the address generating unit may be applied to the SD 51b.

From the foregoing description, according to the present invention, a digital signal generating device can generate a digital FSK signal with no discontinuity in phase and amplitude. Therefore, at a receiver side, the digital FSK signal is received with decreased noise and with a decrease in the number of errors detected.

Further, the digital signal generating device, according to the present invention, can output two mixed digital signals from a single ROM so that the cost of the device is decreased in comparison with the conventional device employing two oscillators.

Still further, the frequency of the digital FSK signal or the frequencies of the two mixed frequencies can be easily changed.

Accordingly, the present invention is advantageous in, for example, telephone-communication line systems employing PCM channels.

## Claims

1. A mixed dual frequency generating system comprising:

sampled data storing means (51), having an output (57), for storing in consecutive addresses a plurality of digital sampled data obtained by sampling, at a predetermined sampling frequency, a fundamental sine wave having a fundamental frequency;

extracting step number storing means (52) for storing at least one extracting step number;

data extracting means (54, 53) for extracting, at the predetermined sampling frequency, output data from the digital sampled data stored in said sampled data storing means (51) by accessing extracting addresses of said sampled data storing means, the extracting addresses being calculated by adding the extracting step number to a first extracting address to form a second extracting address and then assigning the second extracting address to the first extracting address; and

output data fixing means (54, 55, 57, 58) for outputting data "0" at alternate extracting timings.

2. A mixed dual frequency generating system as set forth in Claim 1, wherein said sampled data storing means (51) stores a number of sampling steps equal to an integer multiple of one-quarter of one cycle of the fundamental sine wave.

3. A mixed dual frequency generating system as set forth in Claim 2, wherein said data extracting means comprises:

extracting address latching means (54) for latching the first extracting address until the second extracting address is calculated; and

extracting address calculating means (53) for calculating the second extracting address by adding the extracting step number to the first extracting address.

4. A mixed dual frequency generating system as set forth in Claim 3, wherein said output data fixing means comprises:

said extracting address latching means (54); and control means (55) for supplying a control signal to said extracting address latching means (54) at the alternate extracting timings to output a predetermined extracting address for specifying the data "0".

5. A mixed dual frequency generating system as set forth in Claim 1, wherein said output data fixing means comprises:

fixed data storing means (57) for generating the data "0";

switching means (58) for selecting between the data "0" from said fixed data storing means and one of the items of digital sampled data extracted by the first extracting address; and

control means (55) for supplying a control signal to said switching means (58) to control the selection of the data "0" at the alternate extracting timings.

6. A mixed dual frequency generating system according to Claim 1 wherein:

said plurality of digital sampled data obtained by sampling a fundamental sine wave having a fundamental frequency includes a number of sampling steps equal to one cycle of the fundamental sine wave;

said data extracting means comprises extracting address latching means (54) for latching a first extracting address representing one of the consecutive addresses corresponding to one of the digital sampled data to be extracted from said sampled data storing means (51), and extracting address calculating means (53) for adding the extracting step number to the first extracting address to generate a second extracting address, the second extracting address being generated at a rate equal to the predetermined sampling frequency; and

control means (55) is provided for supplying a first control signal to said extracting address calculating means (53) when the second extracting address is at least as large as the number of sampling steps in one cycle of the fundamental sine wave, said extracting address calculating means (53) responding to the first control signal by subtracting the number of sampling steps from the second extracting address to generate a third extracting address, said control means (55) causing the third extracting address to be stored in said extracting address latching means (54) as the first extracting address when the first control signal is generated and otherwise causing the second extracting address to be stored in said extracting address latching means (54) as the first extracting address.

7. A mixed dual frequency generating system as set forth in Claim 6,
   wherein said output data fixing means comprises said extracting address latching means (54) and said control means (55),
   wherein said control means (55) provides a second control signal to said extracting address latching means (54) at alternate extracting timings, and
   wherein said extracting address latching means (54) provides to said sampled data storing means (51), in response to the second control signal, a predetermined extracting address specifying the data "0".

8. A mixed dual frequency generating system as set forth in Claim 6,
   wherein said control means (55) further provides a second control signal at alternate extracting timings, and
   wherein said output data fixing means comprises:
   said control means (55);
   fixed data storing means (57) for generating the data "0" at an output; and
   switching means (58) for switching, in response to the second control signal, between the outputs of said sampled data storing means (51) and said fixed data storing means (57).

9. A mixed dual frequency generating system according to Claim 1 wherein:
   said plurality of digital sampled data obtained by sampling a fundamental sine wave having a fundamental frequency includes a number of sampling steps equal to one-quarter of one cycle of the fundamental sine wave;
   said data extracting means comprises extracting address latching means (54) for supplying an output sign and latching a first extracting address representing one of the consecutive addresses corresponding to one of the digital sampled data in said sampled data storing means (51), and extracting address calculating means (53) for calculating a second extracting address by adding the extracting step number to the first extracting address, the second extracting address being generated at a rate equal to the predetermined frequency; and
   control means (55) is provided for supplying a first control signal to said extracting address calculating means (53) when the second extracting address is at least as large as the number of sampling steps and supplying a second control signal to said extracting address latching means (54) when the second extracting address is negative, said extracting address calculating means (53) responding to the first control signal by subtracting the second extracting address from two times the number of sampling steps to produce a third extracting address and inverting the sign of the extracting step number until the second control signal is generated said extracting address latching means (54) responding to the first control signal by storing the third extracting address as the first extracting address and othewise storing the second extracting address as the first extracting address, and said extracting address latching means (54) responding to the second control signal by inverting the output sign and multiplying negative one times the second extracting address prior to storing as the first extracting address.

10. A mixed dual frequency generating system as set forth in Claim 9,
    wherein said output data fixing means comprises said extracting address latching means (54) and said control means (55), and
    wherein said extracting address latching means provides, in response to the third control signal, a predetermined extracting address for specifying the data "0".

11. A mixed dual frequency generating system as set forth in Claim 9,
    wherein said control means (55) further provides a third control signal at alternate extracting timings, and
    wherein said output data fixing means comprises: said control means (55);
    fixed data storing means (57) for generating the data "0" at an output; and
    switching means (58) for switching, in response to the third control signal, between the outputs of said sampled data storing means and said fixed data storing means.

**Patentansprüche**

1. Zwei Mischfrequenzen erzeugendes System, welches umfaßt:
   Abtastdaten speichernde Mittel (51) mit einem Ausgang (57), zum Speichern einer Vielzahl von digital abgetasteten Daten unter aufeinanderfolgenden Adressen, die durch Abtastung einer Sinusgrundwelle mit einer fundamentalen Grundfrequenz mit einer vorbestimmten Abtastfrequenz erhalten wurden;
   Extrahier-Schrittnummer-Speichermittel (52) zum Speichern wenigstens einer Extrahier-Schrittnummer;
   Datenextrahiermittel (54, 53) zum Extrahieren von Ausgabedaten mit der vorbestimmten Abtastfrequenz von den in den Abgetastete-Daten-Speichermitteln (51) gespeicherten digital abgetasteten Daten durch Zugreifen auf Extrahieradressen der Abgetastete-Daten-Speichermittel, wobei die Extrahieradressen durch Addition der Extrahier-Schrittnummer zu einer ersten Extrahieradresse berechnet werden, um eine zweite Extrahieradresse zu bilden, und dann durch Zuordnung der zweiten Extrahieradresse zu der ersten Extrahieradresse; und
   Ausgabedaten-Haltemittel (54, 55, 57, 58) zum Ausgeben der Daten "0" zu abwechselnden Extrahier-Zeitvorgaben.

2. Zwei Mischfrequenzen erzeugendes System nach Anspruch 1, dadurch gekennzeichnet, daß die Abgetastete-Daten-Speichermittel (51) eine Anzahl von Abtastschritten gleich einem ganzzahligen Vielfachen eines Viertels einer Periode der Sinusgrundwelle speichern.

3. Zwei Mischfrequenzen erzeugendes System nach Anspruch 2, dadurch gekennzeichnet, daß die Datenextrahiermittel umfassen:

Extrahieradresse-Verriegelungsmittel (54) zum Verriegeln der ersten Extrahieradresse, bis die zweite Extrahieradresse berechnet ist; und

Extrahieradressen-Berechnungsmittel (53) zum Berechnen der zweiten Extrahieradresse durch Addieren der Extrahier-Schrittnummer zu der ersten Extrahieradresse.

4. Zwei Mischfrequenzen erzeugendes System nach Anspruch 3, dadurch gekennzeichnet, daß die Ausgabendaten-Haltemittel umfassen:

die Extrahieradressen-Verriegelungsmittel (54); und

Steuermittel (55) zur Einspeisung eines Steuersignals in die Extrahieradressen-Verriegelungsmittel (54) zu den abwechselnden Extrahier-Zeitvorgaben, um eine vorbestimmte Extrahieradresse für die Spezifikation der Daten "0" auszugeben.

5. Zwei Mischfrequenzen erzeugendes System nach Anspruch 1, dadurch gekennzeichnet, daß die Ausgabedaten-Haltemittel umfassen:

Festdatenspeichermittel (57) zum Erzeugen der Daten "0";

Schaltmittel (58) zum Auswählen zwischen den Daten "0" von den Festdatenspeichermitteln und einem der Datenworte der durch die erste Extrahieradresse extrahierten digital abgetasteten Daten; und

Steuermittel (55) zum Einspeisen eines Steuersignals in die Schaltmittel (58), um die Auswahl der Daten "0" zu den abwechselnden Extrahier-Zeitvorgaben zu steuern.

6. Zwei Mischfrequenzen erzeugendes System nach Anspruch 1, dadurch gekennzeichnet, daß

die Vielzahl von durch Abtasten einer Sinusgrundwelle mit einer Grundfrequenz erhaltenen digitalen abgetasteten Daten eine Anzahl von Abtastschritten gleich einer Periode der Sinusgrundwelle einschließt;

das Daten-Extrahiermittel Extrahieradressen-Verriegelungsmittel (54) zum Verriegeln einer ersten Extrahieradresse, welche eine der aufeinanderfolgenden Adressen entsprechend einem der digital abgetasteten, von den abgetasteten Daten speicherchenden Mitteln (51) zu extrahierenden Daten repräsentiert, umfaßt, und Extrahieradressen berechnende Mittel (53) zum Addieren der Extrahier-Schrittnummer zu der ersten Extrahieradresse, um eine zweite Extrahieradresse zu erzeugen, wobei die zweite Extrahieradresse mit einer Rate gleich der vorbestimmten Abtastfrequenz erzeugt wird; und

Steuermittel (55) vorgesehen sind, um ein erstes Steuersignal in die Extrahieradressenberechnungsmittel (53) einzuspeisen, wenn die zweite Extrahier adresse wenigstens so groß wie die Anzahl der Abtastschritte in einer Periode der Sinusgrundwelle ist, wobei die Extrahieradressenberechnungsmittel (53) auf das erste Steuersignal durch Subtrahieren der Anzahl von Abtastschritten von der zweiten Extrahieradresse reagieren, um eine dritte Extrahieradresse zu erzeugen, wobei die Steuermittel (55) bewirken, daß die dritte Extrahieradresse in den Extrahieradressen-Verriegelungsmitteln (54) als die erste Extrahieradresse gespeichert wird, wenn das erste Steuersignal erzeugt wird, und andernfalls bewirken, daß die zweite Extrahieradresse in den Extrahieradressen-Verriegelungsmitteln (54) als die erste Extrahieradresse gespeichert wird.

7. Zwei Mischfrequenzen erzeugendes System nach Anspruch 6, dadurch gekennzeichnet, daß

die Ausgabedaten-Haltemittel die Extrahieradressen-Verriegelungsmittel (54) und die Steuermittel (55) umfassen,

die Steuermittel (55) ein zweites Steuersignal zu den Extrahieradressen-Verriegelungsmitteln (54) zu abwechselnden Extrahier-Zeitvorgaben senden, und

die Extrahieradressen-Verriegelungsmittel (54) auf das zweite Steuersignal hin eine vorbestimmte Extrahieradresse, welche die Daten "0" spezifiziert, zu den Abgetaste-Daten-Speichermitteln (51) senden.

8. Zwei Mischfrequenzen erzeugendes System nach Anspruch 6, dadurch gekennzeichnet, daß

die Steuermittel (55) ferner ein zweites Steuersignal zu abwechselnden Extrahier-Zeitvorgaben zur Verfügung stellen, und

die Ausgabedaten-Haltemittel umfassen:
die Steuermittel (55);

Festdaten-Speichermittel (57) zum Erzeugen der Daten "0" an einem Ausgang; und

Schaltmittel (58) zum Umschalten zwischen den Ausgängen der Abgetastete-Daten-Speichermittel (51) und der Festdaten-Speichermittel (57) auf das zweite Steuersignal hin.

9. Zwei Mischfrequenzen erzeugendes System nach Anspruch 1, dadurch gekennzeichnet, daß

die Vielzahl von digital abgetasteten Daten, die durch Abtasten einer Sinusgrundwelle mit einer Grundfrequenz erhalten werden, eine Anzahl von Abtastschritten gleich einem Viertel einer Periode der Sinusgrundwelle einschließt;

die Daten-Extrahiermittel Extrahieradressen-Verriegelungsmittel (54) zur Bereitstellen eines Ausgabe-Vorzeichens und zur Verriegeln einer ersten Extrahieradresse, welche eine der aufeinanderfolgen den Adressen, die einem der digitalen, abgetasteten, in den Abgetastete-Daten-Speichermitteln (51) gespeicherten Daten entspricht, repräsentiert, umfaßt, und Extrahieradressen-Berechnungsmittel (53) zum Berechnen einer zweiten Extrahieradresse durch Addieren der Extrahier-Schrittnummer zu der ersten Extrahieradresse, wobei die zweite Extrahieradresse mit einer Rate gleich der vorbestimmten Frequenz erzeugt wird; und

Steuermittel (55) zum Einspeisen eines ersten Steuersignals in die Extrahieradressen-Berechnungsmittel (53) vorgesehen sind, wenn die zweite Extrahieradresse wenigstens so groß wie die Anzahl der Abtastschritte ist, und zum Einspeisen eines zweiten Steuersignals in das Extrahieradressen-Verriegelungsmittel (54), wenn die zweite Extrahieradresse negativ ist, wobei die Extrahier-dressen-Berechnungsmittel (53) auf das erste Steuersignal durch Subtrahieren der zweiten Extrahieradresse von dem zweifachen der Anzahl von Abtastschritten reagieren, um eine dritte Extrahieradresse zu produzieren, und durch Invertieren des Vorzeichens der Extrahier-Schrittnummer, bis das zweite Steuersignal erzeugt wird, wobei die Extrahieradressen-Verriegelungsmittel (54) auf das erste Steuersignal durch Speichern der dritten Extrahieradresse als die erste Extrahieradresse reagieren, und andernfalls durch Speichern der zweiten Extrahieradresse als die erste Extrahieradresse, wobei die Extrahieradressen-Verriegelungsmittel (54) auf das zweite Steuersignal durch Invertieren des Ausgangs-Vorzeichens und Multiplizieren der zweiten Extrahieradresse mit minus Eins, bevor diese als erste Extrahieradresse gespeichert wird, reagieren.

10. Zwei Mischfrequenzen erzeugendes System nach Anspruch 9, dadurch gekennzeichnet, daß

die Ausgabedaten-Haltemittel die Extrahier-dressen-Verriegelungsmittel (54) und die Steuermittel (55) umfassen, und

die Extrahieradressen-Verriegelungsmittel auf das dritte Steuersignal hin eine vorbestimmte Extrahieradresse zum Spezifizieren der Daten "0" zur Verfügung stellen.

11. Zwei Mischfrequenzen erzeugendes System nach Anspruch 9, dadurch gekennzeichnet, daß

die Steuermittel (55) ferner ein drittes Steuersignal zu abwechselnden Extrahier-Zeitvorgaben zur Verfügung stellen; und

die Ausgabedaten-Haltemittel umfassen:

die Steuermittel (55);

Festdaten-Steuermittel (57) zum Erzeugen der Daten "0" an einem Ausgang; und

Schaltmittel (58) zum Umschalten zwischen den Ausgängen der Abgetastete-Daten-Speichermittel und der Festdaten-Speichermittel auf das dritte Steuersignal hin.

**Revendications**

1. Système générateur de fréquence double mixte comprenant:

un moyen de mémorisation de données échantillonnées (51), comportant une sortie (57), pour mémoriser à des adresses consécutives un ensemble de données échantillonnées en numérique obtenues par échantillonnage, à une fréquence d'échantillonnage prédéterminée, d'une onde sinusoïdale fondamentale ayant une fréquence fondamentale;

un moyen de mémorisation de numéro de phase d'extraction (52) pour mémoriser au moins un numéro de phase d'extraction;

un moyen d'extraction de données (54, 53) pour extraire, à la fréquence d'échantillonnage prédéterminée, des données de sortie parmi les données échantillonnées en numérique mémorisées dans le moyen de mémorisation de données echantillonnées (51) par accès à des adresses d'extraction du moyen de mémorisation de données échantillonnées, les adresses d'extraction étant calculées par addition du numéro de phase d'extraction à une première adresse d'extraction pour former une deuxième adresse d'extraction et, ensuite, par affectation de la deuxième adresse d'extraction à la première adresse d'extraction; et un moyen de fixation de données de sortie (54, 55, 57, 58) pour sortir des données "0" à des temps de synchronisation d'extraction alternés.

2. Système générateur de fréquence double mixte selon la revendication 1, dans lequel le moyen de mémorisation de données échantillonnées (51) mémorise un nombre de phases d'échantillonnage égal à un multiple entier d'un quart d'un cycle de l'onde sinusoïdale fondamentale.

3. Système générateur de fréquence double mixte selon la revendication 2, dans lequel le moyen d'extraction de données comprend:

un moyen de verrouillage d'adresse d'extraction (54) pour verrouiller la première adresse d'extraction jusqu'à ce que la deuxième adresse d'extraction soit calculée; et

un moyen de calcul d'adresse d'extraction (53) pour calculer la deuxième adresse d'extraction par l'addition du numéro de phase d'extraction à la première adresse d'extraction.

4. Système générateur de fréquence double mixte selon la revendication 3, dans lequel le moyen de fixation de données de sortie comprend:

le moyen de verrouillage d'adresse d'extraction (54); et

un moyen de commande (55) pour fournir un signal de commande au moyen de verrouillage d'adresse d'extraction (54) aux temps de synchronisation d'extraction alternés afin de sortir une adresse d'extraction prédéterminée pour spécifier les données "0".

5. Système générateur de fréquence double mixte selon la revendication 1, dans lequel le moyen de fixation de données de sortie comprend:

un moyen de mémorisation de données fixées (57) pour générer les données "0";

un moyen de commutation (58) pour faire une sélection entre les données "0" provenant du moyen de mémorisation de données fixées et un des éléments des données échantillonnées en numérique extraites par la première adresse d'extraction; et

un moyen de commande (55) pour fournir un signal de commande au moyen de commutation (58) afin de commander la sélection des données "0" aux temps de synchronisation d'extraction alternés.

6. Système générateur de fréquence double mixte selon la revendication 1, dans lequel:

l'ensemble des données échantillonnées en numérique obtenues par échantillonnage d'une onde sinusoïdale fondamentale ayant une fréquence fondamentale comprend un nombre de phases d'échantillonnage égal à un cycle de l'onde sinusoïdale fondamentale;

le moyen d'extraction de données comprend un moyen de verrouillage d'adresse d'extraction (54) pour verrouiller une première adresse d'extraction représentant une des adresses consécutives correspondant à une des données échantillonnées en numérique à extraire du moyen de mémorisation de données échantillonnées (51), ett un moyen de calcul d'adresse d'extraction (53) pour l'addition du numéro de phase d'extraction à la première adresse d'extraction afin de générer une deuxième adresse d'extraction, la deuxième adresse d'extraction étant générée à un rythme égal à la fréquence d'échantillonnage prédéterminée; et

un moyen de commande (55) est prévu pour fournir un premier signal de commande au moyen de calcul d'adresse d'extraction (53) quand la deuxième adresse d'extraction est au moins aussi grande que le nombre de phases d'échantillonnage dans un cycle de l'onde sinusoïdale fondamentale, le moyen de calcul d'adresse d'extraction (53) réagissant au premier signal de commande par la soustraction du nombre de phases d'échantillonnage de la deuxième adresse d'extraction pour générer une troisième adresse d'extraction, le moyen de commande (55) faisant en sorte que la troisième adresse d'extraction soit mémorisée dans le moyen de verrouillage d'adresse d'extraction (54) comme première adresse d'extraction quand le premier signal de commande est engendré et, autrement, faisant en sorte que la deuxième adresse d'extraction soit mémorisée dans le moyen de verrouillage d'adresse d'extraction (54) comme première adresse d'extraction.

7. Système générateur de fréquence double mixte selon la revendication 6, dans lequel:

le moyen de fixation de données de sortie comprend le moyen de verrouillage d'adresse d'extraction (54) et le moyen de commande (55),

le moyen de commande (55) fournit un deuxième signal de commande au moyen de verrouillage d'adresse d'extraction (54) à des temps de synchronisation d'extraction alternés, et

le moyen de verrouillage d'adresse d'extraction (54) fournit au moyen de mémorisation de données échantillonnées (51) une adresse d'extraction prédéterminée spécifiant les données "0" en réponse au deuxième signal de commande.

8. Système générateur de fréquence double mixte selon la revendication 6, dans lequel:

le moyen de commande (55) fournit en outre un deuxième signal de commande à des temps de synchronisation d'extraction alternés, et

le moyen de fixation de données de sortie comprend:

le moyen de commande (55);

un moyen de mémorisation de données fixées (57) pour générer les données "0" à une sortie; et

un moyen de commutation (58) pour faire une commutation, en réponse au deuxième signal de commande, entre les signaux de sortie du moyen de mémorisation de données échantillonnées (51) et du moyen de mémorisation de données fixées (57).

9. Système générateur de fréquence double mixte selon la revendication 1, dans lequel:

l'ensemble de données échantillonnées en numérique obtenues par échantillonnage d'une onde sinusoïdale fondamentale ayant une fréquence fondamentale comprend un nombre de phases d'échantillonnage égal à un quart d'un cycle de l'onde sinusoïdale fondamentale;

le moyen d'extraction de données comprend un moyen de verrouillage d'adresse d'extraction (54) pour fournir un signe de sortie et verrouiller une première adresse d'extraction représentant une des adresses consécutives correspondant à une des données échantillonnées en numérique dans le moyen de mémorisation de données échantillonnées (51), et un moyen de calcul d'adresse d'extraction (53) pour calculer une deuxième adresse d'extraction par l'addition du numéro de phase d'extraction à la première adresse d'extraction, la deuxième adresse d'extraction étant générée à un rythme égal à la fréquence prédéterminée; et

un moyen de commande (55) est prévu pour fournir un premier signal de commande au moyen de calcul d'adresse d'extraction (53) quand la deuxième adresse d'extraction est au moins aussi grande que le nombre de phases d'échantillonnage et pour fournir un deuxième signal de commande au moyen de verrouillage d'adresse d'extraction (54) quand la deuxième adresse d'extraction est négative, le moyen de calcul d'adresse d'extraction (53) réagissant au premier signal de commande par la soustraction de la deuxième adresse d'extraction de deux fois le nombre de phases d'échantillonnage pour produire une troisième adresse d'extraction et l'inversion du signe du numéro de phase d'extraction jusqu'à ce que le deuxième signal de commande soit engendré, le moyen de verrouillage d'adresse d'extraction (54) réagissant au premier signal de commande par la mémorisation de la troisième adresse d'extraction comme première adresse d'extraction et, autrement, par la mémorisation de la deuxième adresse d'extraction comme première adresse d'extraction, et le moyen de verrouillage d'adresse d'extraction (54) réagissant au deuxième signal de commande par l'inversion du signe de sortie et la multiplication en négatif d'une fois la deuxième adresse d'extraction avant sa mémorisation comme première adresse d'extraction.

10. Système générateur de fréquence double mixte selon la revendication 9, dans lequel:

le moyen de fixation de données de sortie comprend le moyen de verrouillage d'adresse d'extraction (54) et le moyen de commande (55), et

le moyen de verrouillage d'adresse d'extraction fournit, en réponse au troisième signal de commande, une adresse d'extraction prédéterminée pour spécifier les données "0".

11. Système générateur de fréquence double mixte selon la revendication 9, dans lequel:

le moyen de commande (55) fournit en outre un troisième signal de commande à des temps de

12

synchronisation d'extraction alternés, et

le moyen de fixation de données de sortie comprend:

le moyen de commande (55);

un moyen de mémorisation de données fixées (57) pour générer les données "0" à une sortie; et

un moyen de commutation (58) pour faire une commutation, en réponse au troisième signal de commande, entre les signaux de sortie du moyen de mémorisation de données échantillonnées et du moyen de mémorisation de données fixées.

# Fig. 1

FSK SIGNAL

$f_a$ = 980Hz

$f_z$ = 1180Hz

# Fig. 2

# Fig.3

# Fig. 4

$f_z$ (1180Hz)   $f_a$ (980Hz)

$t_0$ $t_1$

# Fig. 5

# Fig. 6

# Fig. 7

```
        ( START )
            │
     a      ◇ S₁      z
   ┌────< c = a or z ? >────┐
   │S₂                      │S₃
 ┌─────────┐          ┌─────────┐
 │ d₁ = d₁ₐ│          │ d₁ = d₁z│
 └─────────┘          └─────────┘
            │
      ┌───────────┐
      │ d₂ = d₁ + d₃ │ S₄
      └───────────┘
            │
  YES   ◇ S₅
 ┌────< d₂ ≧ 3200 >
 │S₆        │ NO
 ┌──────────┐
 │ d₂ = d₂ - 3200│
 └──────────┘
            │
      ┌──────────┐
      │ d₃ = d₂  │ S₇
      └──────────┘
            │
   ┌──────────────┐
   │ OUTPUT Di BY d₃ │ S₈
   └──────────────┘
            │
   S₉  ◇              NO
    < TRANS. END >────┐
            │ YES
         ( END )
```

## Fig. 8

## Fig. 9

# Fig. 10

## Fig. 11

START

$S_{1a}$  — $c = a$ or $z$ ?  (a / z)

$S_{2a}$  $d_1 = d_{a1}$

$S_{3a}$  $d_1 = d_{z1}$

$S_{4a}$  $d_2 = d_1 + d_3$

$S_{5a}$  $d_2 \geq 800$ ?  (Y / N)

$S_{6a}$  $d_2 = 1600 - d_2$  $d_1 = -d_1$

$S_{7a}$  $d_2 \leq 0$ ?  (Y / N)

$S_{8a}$  $d_3 = -d_2$  $d_4 = -d_4$

$S_{10a}$  $d_3 = d_2$  $d_4 = d_4$

$S_{9a}$  $d_1 = -d_1$

$S_{11a}$  OUTPUT Di  BY $d_3$

$S_{12a}$  TRANS END ?  (N / Y)

E N D

## Fig. 12

*Fig. 13A*

*Fig. 13B*

# Fig. 14

# Fig. 16

# Fig. 15